# FASCICULE DE BREVET EUROPEEN

(11) **EP 0 604 292 B1**
(45) Date de publication et mention de la délivrance du brevet: **01.04.1998**
(21) Numéro de dépôt: 93403098.2
(22) Date de dépôt: 20.12.1993
(51) Int. Cl.: C01B 33/20

(54) **Phyllosilicates de synthèse et procédé pour leur préparation**
Synthetische Phyllosilicate und Verfahren zu ihrer Herstellung
Synthetic phyllosilicates and process for their preparation

(30) Priorité: 21.12.1992 FR 9215321
(43) Date de publication de la demande: 29.06.1994
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Reig, Patrice, F-33400 Talence (FR); Demazeau, Gérard, F-33171 Gradignan Cédex (FR); Naslain, Roger, F-33600 Pessac (FR)
(74) Mandataire: Le Roux, Martine

(56) Documents cités:
- EP-A- 0 326 019
- EP-A- 0 366 234
- EP-A- 0 503 995

## Description

La présente invention a pour objet de nouveaux silicates lamellaires de synthèse et un procédé pour leur préparation.

Lesdits nouveaux silicates ont une structure lamellaire et présentent une grande résistance à l'oxydation ainsi qu'une stabilité thermique importante.

Les matériaux lamellaires sont particulièrement appréciés dans de nombreux domaines tel que l'alimentation animale, la catalyse hétérogène, l'élaboration d'électrodes électrochimiques, de céramiques, de lubrifiants... On préconise notamment leur intervention à titre d'interphase dans les matériaux composites.

Lesdits matériaux lamellaires sont relativement nombreux. Citons par exemple les phyllosilicates naturels tels que le talc, les micas, ... et les matériaux de structure graphitique tels que le carbone ou le nitrure de bore...

On sait que les silicates lamellaires naturels ou de synthèse renferment dans leur réseau des anions OH⁻ et/ou F⁻. Ceci a notamment été décrit par R.M. Hazen et D.R. Wones dans American Mineralogist, vol. 57, pp. 103-129, 1972. La présence de ces ions hydroxyles et fluorures limite la stabilité thermique desdits silicates. Ainsi, la plupart des silicates lamellaires naturels se décomposent-ils vers 600°C. Le remplacement partiel des ions hydroxyles par des ions fluorures, tel qu'au sein des composés naturels de type fluorophlogopite ou le remplacement total desdits ions hydroxyles par des ions fluorures, tel que décrit dans la demande EP-A-0 366 234 et plus particulièrement dans l'exemple 10 de ladite demande où un mica de formule KMg₃(AlSi₃O₁₀)F₂ est préparé, ne permet pas de résoudre de façon parfaite le problème de la stabilité thermique de ces matériaux.

Selon l'invention, on propose de nouveaux matériaux : des silicates de synthèse qui présentent une structure lamellaire et qui possèdent une grande résistance à l'oxydation ainsi qu'une importante stabilité thermique, jusqu'à environ 950°C.

Lesdits nouveaux silicates lamellaires de l'invention ont une structure de type T-O-T (tétraèdre - octaèdre - tétraèdre) exempte d'ions OH⁻ et F⁻.

Une telle structure est familière à l'homme du métier. C'est notamment celle des silicates naturels tels les micas ou le talc ou encore la pyrophyllite. Elle est à base d'un feuillet d'octaèdres enserré entre deux feuillets de tétraèdres. La succession des feuillets (tétraédrique - octaédrique - tétraédrique) forme des couches dites T-O-T, séparées ou non par des feuillets compensateurs de charge, généralement constitués de gros cations.

Les ions occupent les sites desdits tétraèdres et octaèdres en fonction principalement de leur taille et également de leur charge.

On sait par exemple que dans le cas d'un mica de type phlogopite, représenté par la formule : KMg₃(AlSi₃)O₁₀ (OH, F)₂, les ions magnésium occupent les sites octaédriques alors que les ions silicium et aluminium plus petits, sont répartis statistiquement dans les sites tétraédriques. Les ions K⁺ sont disposés dans les feuillets compensateurs de charge.

En revanche les silicates de l'invention ont donc une structure de type T-O-T qui ne renferme ni ions hydroxyles, ni ions fluorures.

Une telle structure, selon une variante préférée de l'invention, ne renferme plus que des anions O²⁻. Selon cette variante, on peut qualifier les silicates de l'invention de silicates lamellaires tout oxygénés ou phyllosiloxydes.

On n'exclut toutefois pas selon l'invention l'intervention d'autres anions, et notamment celle de l'ion nitrure N³⁻.

Les cations sont choisis et distribués dans ladite structure en fonction de leur taille et de leur charge.

Les silicates de l'invention sont avantageusement des isotypes de silicates lamellaires existants, naturels ou de synthèse.

Leur structure se déduit de celle desdits silicates existants par remplacement des ions OH⁻ et/ou F⁻ par des ions O²⁻ et / ou N³⁻ et par remplacement et/ou réarrangement approprié des cations.

Lesdits remplacements et/ou réarrangements ne se font évidemment pas de manière aléatoire. Il convient notamment de respecter :
- la neutralité électrique,
- le nombre de cations dans les sites,
- l'occupation de ces sites.

Les cations peuvent être remplacés et/ou réarrangés dans le seul but de compenser le remplacement des anions (OH⁻, F⁻ par O^{2-,} N³⁻···). On peut prévoir en outre des substitutions supplémentaires au niveau desdits cations dans le but de modifier la nature des liaisons chimiques, au sein des feuillets - -tant dans les sites octaédriques que dans les sites tétraédriques-- et/ou entre les feuillets; ceci bien évidemment pour jouer sur la stabilité thermique du matériau. On peut ainsi ajuster la température de décomposition d'un matériau de l'invention en faisant varier la nature des ions dans les couches et entre les couches.

Les silicates de l'invention peuvent notamment être des isotypes des silicates naturels tels les micas --par exemple, le mica phlogopite, le mica paragonite, le mica muscovite...--, le talc ou la pyrophyllite. Cette liste n'est nullement limitative.

De tels silicates, objets de l'invention, répondent par exemple aux formules ci-après :
(a) KMg₂AlSi₄O₁₂
(b) KAl₃Si₄N₂O₁₀
(c) K₁₋ₓCaₓMg₂Al(Si₄₋ₓAlₓ)O₁₂, isotypes du mica phlogopite de formule KMg₃AlSi₃O₁₀(OH)₂
(d) NaAl₃Si₂Al₂O₁₂, isotype du mica paragonite de formule NaAl₂Si₃AlO₁₀(OH)₂
(e) KAl₃Si₂Al₂O₁₂, isotype du mica muscovite de formule KAl₂Si₃AlO₁₀(OH)₂
(f) CaMg₃Si₄O₁₂
(g) BaMg₃Si₄O₁₂
(h) SrMg₃Si₄O₁₂, isotype du talc de formule Mg₃Si₄O₁₀(OH)₂
(i) KTiAlSi₄O₁₂, isotype de la pyrophyllite de formule Al₂Si₄O₁₀(OH)₂.

On conçoit aisément qu'en remplaçant dans les formules ci-dessus, par exemple, Mg²⁺ par Mn²⁺, Fe²⁺ ou Cu²⁺ on obtient des formules d'autres silicates selon l'invention. La même démarche peut être appliquée pour des ions Mⁿ⁺ dans la mesure où sont respectées la neutralité électrique et les règles faisant correspondre taille de l'ion et occupation des sites.

La formule (c) illustre une substitution supplémentaire, telle que qualifiée ci-dessus.

Le remplacement des anions OH⁻ par des O²⁻ dans le cas du mica phlogopite conduit, par exemple, à la formule (a). On a, en plus, substitué à certains cations K⁺ des cations Ca⁺⁺ pour la formule (c). Ceci présente un intérêt dans la mesure où les liaisons faisant intervenir des ions calcium sont plus fortes.

Les silicates de l'invention peuvent également être des isotypes de silicates de synthèse; isotype par exemple du mica fluorophlogopite de synthèse de formule KMg₃AlSi₃O₁₀F₂...

Leur structure ne dérive toutefois pas forcément de celle de matériaux existants.

Les silicates de l'invention se présentent sous forme divisée.

Leur procédé de préparation constitue un autre objet de la présente invention. Il comprend :
- l'élaboration d'un sol à partir de précurseurs apportant les éléments entrant dans la composition dudit silicate et d'un solvant organique ;
- la transformation dudit sol en gel par évaporation dudit solvant ;
- le traitement dudit gel dans des conditions de température et de pression, proches de ou supérieures à celles caractérisant l'état hypercritique.

Les précurseurs intervenant sont avantageusement des composés organométalliques --des alcoolates-- et de l'hydrazine pour l'introduction d'ions nitrure. Ils interviennent en proportions stoechiométriques dans un solvant organique, tel que par exemple le 2-méthoxyéthanol.

Le sol est réalisé en atmosphère inerte, sous courant d'azote par exemple.

Ledit sol est ensuite converti en gel (xérogel) par évaporation du solvant dans des conditions thermodynamiques douces ; généralement à une température comprise entre 100 et 150°C.

Ledit gel est alors traité dans des conditions de température et de pression proches de ou supérieures à celles caractérisant l'état hypercritique. Lesdites conditions de température et de pression dépendent évidemment de la composition et de la structure du silicate lamellaire recherché.

On doit généralement opérer à une pression comprise entre 10 et 200 MPa et à une température comprise entre 300 et 850°C. La pression est avantageusement comprise entre 50 et 100 MPa.

A l'issue de cette troisième étape, on obtient une phase solide dont on peut étudier les caractéristiques physico-chimiques, notamment par diffraction des rayons X, microscopie électronique, spectroscopie IR...

On peut notamment mettre en évidence, par spectroscopie IR l'absence de la bande d'absorption à 3650 cm⁻¹ caractéristique de la vibration des ions hydroxyles.

On peut vérifier par microscopie électronique à balayage et à transmission que ladite phase solide possède bien une structure lamellaire, responsable on le sait de son aptitude au clivage et de ses propriétés lubrifiantes.

On peut enfin mesurer la stabilité thermique de ladite phase solide.

Au vu des propos ci-dessus, l'homme du métier comprend qu'il est possible de préparer selon l'invention toute une série de nouveaux silicates lamellaires, en optimisant le choix des ions, des précurseurs, les conditions de préparation du gel, les paramètres thermodynamiques de la synthèse pseudo-solvothermale...

Un tel résultat n'était nullement prévisible dans la mesure où les ions OH⁻ ou F⁻ qui participent à la constitution des sites octaédriques et tétraédriques, apparaissaient comme indispensables à la stabilisation du réseau, sur la base des minéraux existants. Il s'est ainsi avéré impossible à ce jour d'obtenir des silicates de structure lamellaire de type T-O ou T-O-T-O', par exemple isotypes de la kaolinite ou de la chlorite.

On annexe à la présente description les figures 1 à 6, sur lesquelles :
- Fig. 1 représente, schématisée, la structure d'un mica naturel de type phlogopite ;
- Fig. 2 représente, schématisée de la même façon, la structure d'un silicate de l'invention, isotype dudit mica naturel selon la figure 1 ;
- Fig. 3 reproduit le spectre de diffraction des rayons X dudit mica naturel de type phlogopite ;
- Fig.4 reproduit le spectre de diffraction des rayons X dudit silicate de l'invention, isotype dudit mica naturel de type phlogopite ;
- Fig. 5 représente une partie du spectre d'absorption IR dudit silicate de l'invention, isotype dudit mica naturel de type phlogopite ;
- Fig. 6 représente une partie du spectre d'absorption IR d'un autre silicate de l'invention, isotype d'un mica naturel de type paragonite.

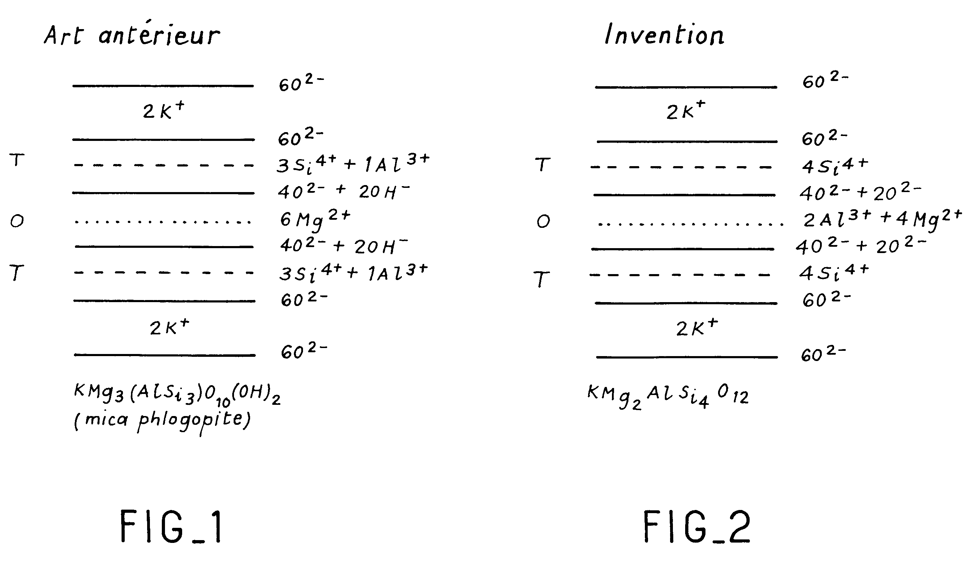

Sur la figure 1, on a donc schématisé la structure du mica phlogopite naturel de formule : KMg₃(AlSi₃)O₁₀(OH)₂. Comme indiqué plus avant dans la présente description, les groupements hydroxyles et les cations magnésium occupent les sites octaédriques (O) alors que les cations silicium et aluminium sont répartis dans les sites tétraédriques (T). On a représenté la structure T-O-T entre deux feuillets compensateurs de charge, renfermant les cations potassium.

Sur la figure 2, on a schématisé la structure d'un silicate de synthèse selon l'invention, isotype du mica naturel selon la figure 1. Ledit silicate de l'invention a pour formule : KMg₂AlSi₄O₁₂. Sa synthèse est décrite à l'exemple 1 ci-après. Il s'agit d'un silicate lamellaire tout oxygéné ou phyllosiloxyde.

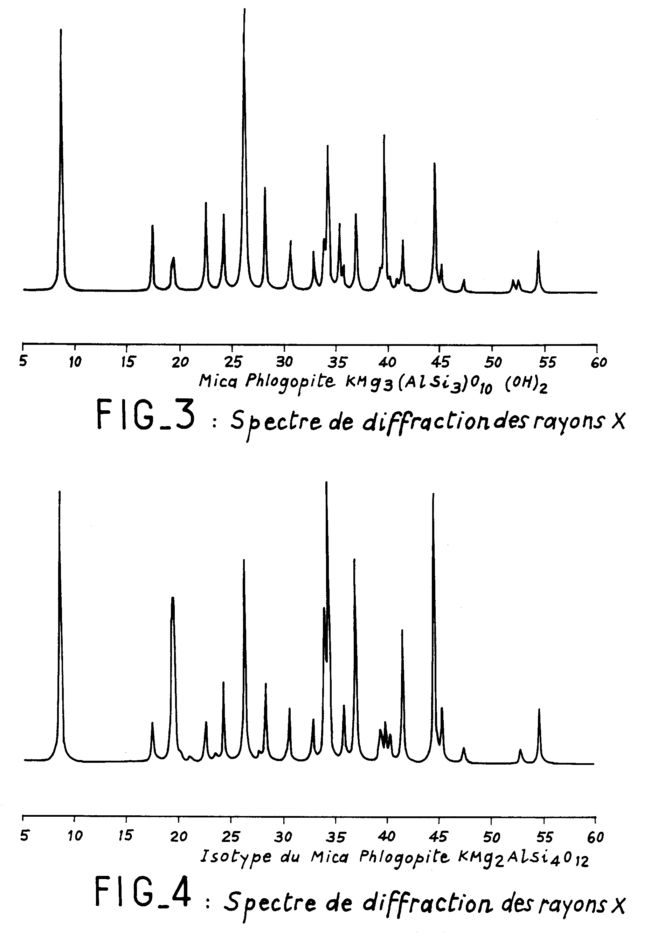

Sur les figures 3 et 4, on observe que les deux silicates --le silicate naturel et le silicate de synthèse selon l'invention-- présentent les mêmes raies de diffraction des rayons X.

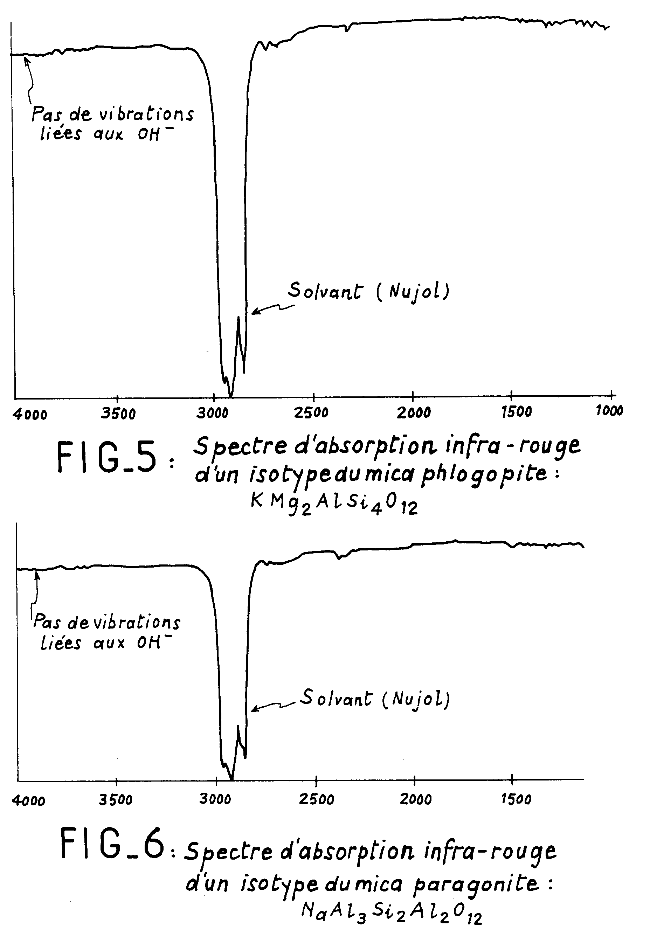

Sur les figures 5 et 6, on a mis en évidence l'absence des groupements OH⁻ au sein de la structure de deux silicates tout oxygénés de l'invention :
- celui de formule KMg₂AlSi₄O₁₂, isotype du mica phlogopite ;
- celui de formule NaAl₃Si₂Al₂O₁₂, isotype du mica paragonite. La synthèse dudit silicate est décrite à l'exemple 2 ci-après.

Les exemples ci-après illustrent l'invention.

### EXEMPLE 1 : Synthèse d'un isotype tout oxygéné du mica phlogopite : le phyllosiloxyde KMg₂(AlSi₄)O₁₂

Ledit matériau a été obtenu par traitement en synthèse pseudo-solvothermale d'un gel précurseur de la composition KMg₂(AlSi₄)O₁₂.

Le sol précurseur dudit gel est préparé par dissolution des alcoolates correspondants (pris en proportion stoéchiométrique) dans un solvant organique : le 2-méthoxyéthanol.

Pour chaque gramme de matériau final KMg₂(AlSi₄)O₁₂ potentiellement présent dans le sol, on ajoute, à 75 ml de 2-méthoxyéthanol, sous courant d'azote au reflux :
- 1,602 g d'orthosilicate de tétraéthyle [TEOS : Si(OC₂H₅)₄],
- 0,166 g de méthylate de potassium [KOCH₃],
- 0,677 g de di-éthylate de magnésium [Mg(OC₂H₅)₂],
- 0,584 g de tri-isobutylate d'aluminium [Al(OC₄H₉)₃],
ces quantités ayant été optimisées en fonction de la réactivité des alcoolates et des conditions expérimentales mises en oeuvre.

On ajoute également 5 % environ, en masse, d'acide nitrique afin de contrôler la vitesse d'hydrolyse et la dissolution des alcoolates.

La réaction est terminée quand le sol est translucide et non-visqueux.

Ce sol est ensuite converti en gel par évaporation entre 100 et 150°C.

Le xérogel obtenu est alors isolé dans un tube d'or (d'autres métaux pouvant naturellement être utilisés ; ce que n'ignore pas l'homme de l'art) qui est scellé et traité en synthèse pseudo-solvothermale dans les conditions suivantes :
P = 1000 bar (10⁸ Pa)
T = 800°C
t = 48 h.

Le matériau obtenu a été analysé par radiocristallographie. Il présente les mêmes raies de diffraction des rayons X que le mica phlogopite naturel : KMg₃(AlSi₃)O₁₀(OH)₂ (cf. Fig. 3 et 4). La spectroscopie IR n'a pas mis en évidence l'existence de la bande d'absorption caractéristique des groupes hydroxyles à 3650 cm⁻¹ (cf. Fig. 5).

Une étude par microscopie électronique à balayage a clairement montré que les particules de la phase KMg₂(AlSi₄)O₁₂ présentent une morphologie lamellaire (plaquettes hexagonales) attestant de la structure en feuillets du nouveau matériau selon l'invention.

Ledit nouveau matériau est stable jusqu'à 900°C, au lieu de 650°C environ pour le mica phlogopite naturel.

### EXEMPLE 2 : Synthèse d'un isotype tout oxygéné du mica paragonite : le phyllosiloxyde NaAl₃(Si₂Al₂)O₁₂

Ledit matériau a été obtenu par traitement en synthèse pseudo-solvothermale d'un gel précurseur de la composition : NaAl₃(Si₂Al₂)O₁₂. Ladite synthèse est analogue à celle décrite à l'exemple 1. Le solvant utilisé est le même : le 2-méthoxyéthanol.

Pour chaque gramme de matériau final NaAl₃(Si₂Al₂)O₁₂ potentiellement présent dans le gel, on ajoute, sous courant d'azote, au reflux :
- 1,102 g d'orthosilicate de tétraéthyle [TEOS : Si(OC₂H₅)₄],
- 0,180 g d'éthylate de sodium [NaOC₂H₅],
- 3,258 g de tri-isobutylate d'aluminium [Al(OC₄H₉)₃].

Le sol est converti en gel comme indiqué à l'exemple 1 (évaporation entre 100 et 150°C).

Les conditions de synthèse solvothermale -optimales- sont les suivantes:
P = 800 bar (8.10⁷ Pa)
T = 600°C
t = 48 h.

Les différents procédés de caractérisation ont permis d'établir qu'il s'est formé un nouvel oxyde de formule NaAl₃(Si₂Al₂)O₁₂. Les analyses radiocristallographiques sur poudres ont permis d'observer des raies de diffraction similaires à celles du mica paragonite dioctaédrique : NaAl₂(Si₃Al)O₁₀(OH)₂.

Une étude par spectroscopie d'absorption IR a montré que le nouveau matériau est exempt de groupement hydroxyle (cf. Fig. 6).

De plus, sa morphologie lamellaire a été mise en évidence par microscopie électronique à transmission : on a observé de petites plaquettes feuilletées de 0,1 µm.

### EXEMPLE 3 : Synthèse d'un isotype tout oxygéné du mica phlogopite, partiellement substitué au calcium.

La synthèse mise en oeuvre est analogue à celle décrite à l'exemple 1. Elle a permis d'obtenir une série de nouveaux matériaux de formulation générale :

K₁₋ₓCaₓMg₂Al₁₊ₓSi₄-xO₁₂,

la valeur de x pouvant varier entre 0,1 et 0,4.

Pour 1 g de K₁₋ₓCaₓMg₂Al₁₊ₓSi₄₋ₓO₁₂, on additionne à 75 ml de 2-méthoxyéthanol, sous courant d'azote au reflux :
- 1,785 g à 1,925 g d'orthosilicate de tétraéthyle [TEOS : Si(OC₂H₅)₄],
- 0,100 g à 1,151 g de méthylate de potassium [KOCH₃],
- 0,646 g à 0,823 g de tri-isobutylate d'aluminium [Al(OC₄H₉)₃],
- 0,027 g à 0,107 g de di-méthylate de calcium [Ca(OCH₃)₂],
- 0,546 g de di-éthylate de magnésium [Mg(OC₂H₅)₂].

Les conditions expérimentales d'élaboration des sols de différentes compositions (taux de calcium variant de 0,1 à 0,4) et leur conversion en gel ont été les mêmes que celles décrites dans les exemples précédents.

Les xérogels obtenus ont ensuite été traités dans les conditions solvothermales suivantes :
P = 100 à 500 bar (1 à 5.10⁷ Pa)
T = 750 à 800°C
t = 48 à 72 h.

Les différents procédés de caractérisation ont permis de montrer l'existence d'une famille de matériaux isotypes d'un mica phlogopite dans laquelle le calcium est partiellement substitué au potassium.

## Revendications

1. Phyllosilicate de synthèse présentant une structure lamellaire de type T-O-T (tétraèdre - octaèdre - tétraèdre) exempte d'ions OH⁻ et F⁻.

2. Phyllosilicate selon la revendication 1, isotype d'un silicate lamellaire naturel ou de synthèse, dont la structure se déduit de celle dudit silicate lamellaire naturel ou de synthèse par remplacement des ions OH⁻ et/ou F⁻ par des ions O²⁻ et/ou N³⁻ et remplacement et/ou réarrangement approprié(s) des cations.

3. Phyllosilicate selon l'une des revendications 1 ou 2, isotype d'un silicate choisi parmi les micas, le talc et la pyrophyllite.

4. Phyllosilicate selon l'une quelconque des revendications 1 à 3, isotype du mica phlogopite, paragonite ou muscovite.

5. Phyllosilicate selon la revendication 1, répondant à l'une des formules ci-après :
KMg₂AlSi₄O₁₂
KAl₃Si₄N₂O₁₀
K₁₋ₓCaₓMg₂Al₁₊ₓSi₄₋ₓO₁₂ avec 0,10 ≤ x ≤ 0,40
NaAl₃Si₂Al₂O₁₂
KAl₃Si₂Al₂O₁₂
CaMg₃Si₄O₁₂
BaMg₃Si₄O₁₂
SrMg₃Si₄O₁₂
KTiAlSi₄O₁₂.

6. Procédé pour la préparation d'un phyllosilicate selon l'une quelconque des revendications précédentes, caractérisé en ce qu'il comprend :
- l'élaboration d'un sol à partir de précurseurs apportant les éléments entrant dans la composition dudit phyllosilicate et d'un solvant organique ;
- la transformation dudit sol en gel par évaporation dudit solvant;
- le traitement dudit gel dans des conditions de température et de pression, proches de ou supérieures à celles caractérisant l'état hypercritique.

7. Procédé selon la revendication 6, caractérisé en ce que lesdits précurseurs sont choisis parmi les alcoolates et l'hydrazine.

8. Procédé selon l'une des revendications 6 ou 7, caractérisé en ce que le traitement dudit gel est réalisé à une température comprise entre 300 et 850°C et à une pression comprise entre 10 et 200 MPa.

## Claims

1. A synthetic phyllosilicate having a lamellar structure of the type T-O-T (tetrahedron - octahedron - tetrahedron) devoid of OH⁻ and F⁻ ions.

2. A phyllosilicate according to claim 1 which is an isotype of a natural or synthetic lamellar silicate and whose structure is derived from that of said natural or synthetic lamellar silicate by replacement of the OH⁻ and/or F⁻ ions with O²⁻ and/or N³⁻ ions and appropriate replacement and/or rearrangement of the cations.

3. A phyllosilicate according to one of claims 1 or 2 which is an isotype of a silicate selected from micas, talc and pyrophyllite.

4. A phyllosilicate according to any one of claims 1 to 3 which is an isotype of the phlogopite mica, paragonite mica or muscovite mica.

5. A phyllosilicate according to claim 1 which has one of the following formulae:
KMg₂AlSi₄O₁₂
KAl₃Si₄N₂O₁₀
K₁₋ₓCaₓMg₂Al₁₊ₓSi₄₋ₓO₁₂, where 0.10 ≤ x ≤ 0.40
NaAl₃Si₂Al₂O₁₂
KAl₃Si₂Al₂O₁₂
CaMg₃Si₄O₁₂
BaMg₃Si₄O₁₂
SrMg₃Si₄O₁₂
KTiAlSi₄O₁₂

6. A process for the preparation of a phyllosilicate according to any one of the preceeding claims, which comprises:
- production of a sol from precursors providing the elements forming part of the composition of said phyllosilicate, and an organic solvent;
- conversion of said sol to a gel by evaporation of said solvent; and
- treatment of said gel under temperature and pressure conditions close to or higher than those characterizing the hypercritical state.

7. A process according to claim 6 wherein said precursors are selected from alcoholates and hydrazine.

8. A process according to one of claims 6 or 7 wherein the treatment of said gel is carried out at a temperature between 300 and 850°C and at a pressure between 10 and 200 MPa.

## Patentansprüche

1. Synthetisches Phyllosilicat, das eine von OH⁻-und F⁻-Ionen freie Schichtstruktur vom Typ T-O-T (Tetraeder-Oktaeder-Tetraeder) aufweist.

2. Phyllosilicat nach Anspruch 1, das mit einem natürlichen oder synthetischen Schichtsilicat isotyp ist, wobei sich seine Struktur von der des natürlichen oder synthetischen Schichtsilicats ableitet durch Ersetzen der OH⁻- und/oder F⁻-Ionen durch O²⁻- und/oder N³⁻-Ionen und geeignetes Ersetzen und/oder Umordnen der Kationen.

3. Phyllosilicat nach Anspruch 1 oder 2, das isotyp ist mit einem Silicat, das ausgewählt ist aus den Glimmern, Talk und Pyrophyllit.

4. Phyllosilicat nach einem der Ansprüche 1 bis 3, das isotyp ist mit Glimmer, Phlogopit, Paragonit oder Muskovit.

5. Phyllosilicat nach Anspruch 1, das mit einer der nachfolgenden Formeln übereinstimmt:
KMg₂AlSi₄O₁₂
KAl₃Si₄N₂O₁₀
K₁₋ₓCaₓMg₂Al₁₊ₓSi₄₋ₓO₁₂ mit 0,10 ≤ x ≤ 0,40
NaAl₃Si₂Al₂O₁₂
KAl₃Si₂Al₂O₁₂
CaMg₃Si₄O₁₂
BaMg₃Si₄O₁₂
SrMg₃Si₄O₁₂
KTiAlSi₄O₁₂.

6. Verfahren zur Herstellung eines Phyllosilicats gemäß einem der vorangehenden Ansprüche, dadurch gekennzeichnet, daß es aufweist:
- das Bereiten eines Sols ausgehend von Vorläufern, die die in die Verbindung des Phyllosilicats eingehenden Elemente zuführen, und einem organischen Lösungsmittel;
- die Umwandlung des Sols in ein Gel durch Verdampfen des Lösungsmittels;
- die Behandlung des Gels unter Temperatur- und Druck-Bedingungen, die denjenigen, die den überkritischen Zustand kennzeichnen, nahe sind oder sie überschreiten.

7. Verfahren nach Anspruch 6, dadurch gekennzeichnet, daß die Vorläufer ausgewählt sind unter den Alkoholaten und Hydrazin.

8. Verfahren nach Anspruch 6 oder 7, dadurch gekennzeichnet, daß die Behandlung des Gels bei einer Temperatur zwischen 300 und 850°C und bei einem Druck zwischen 10 und 200 MPa durchgeführt wird.
